# EUROPÄISCHE PATENTSCHRIFT

(11) **EP 1 175 294 B1**
(45) Veröffentlichungstag und Bekanntmachung des Hinweises auf die Patenterteilung: **29.01.2003**
(21) Anmeldenummer: 00940145.6
(22) Anmeldetag: 27.04.2000
(51) Int. Cl.: B29C 63/14, B29C 65/20, B01D 29/15, D06B 23/04

(54) **VERFAHREN ZUR BILDUNG EINES TRÄGERKÖRPERS IN FORM EINER GARNHÜLSE ODER EINES FILTEREINSATZES**
METHOD FOR CREATING A SUPPORT BODY IN THE FORM OF A YARN TUBE OR A FILTER CARTRIDGE
PROCEDE DE FORMATION D'UN CORPS DE SUPPORT SOUS FORME D'UN TUBE A FIL OU D'UNE CARTOUCHE FILTRANTE

(30) Priorität: 28.04.1999 DE 19919211
(43) Veröffentlichungstag der Anmeldung: 30.01.2002
(73) Patentinhaber: Jos. Zimmermann GmbH & Co. KG, 52477 Alsdorf (DE)
(72) Erfinder: BEHRENS, Hans, D-52070 Aachen (DE); KEUSCH, Albert, D-52526 Übach-Palenberg (DE)
(74) Vertreter: König, Werner, Dipl.-Ing.
(86) Internationale Anmeldenummer: DE0001300
(87) Internationale Veröffentlichungsnummer: WO00064661

(56) Entgegenhaltungen:
- WO-A-97/42081
- DD-A- 257 797
- US-A- 3 470 057
- US-A- 4 621 508

## Beschreibung

Die Erfindung betrifft ein Verfahren zur Bildung eines Trägerkörpers in Form einer Garnhülse oder eines Filtereinsatzes, mit einem Durchbrüche aufweisenden Basiselement aus thermoplastischem Material und einer damit fest verbundenen, flüssigkeits- und/oder gasdurchlässigen, auf die Oberfläche des Basiselements auflegbaren flachen Abdeckung, bei dem die Verbindung zwischen Basiselement und Abdeckung mittels eines partiellen Anschmelzens des Basiselements erfolgt.

Es sind bereits Trägerkörper als Garnhülsen bekannt. Dabei kann das Basiselement aus Polypropylen bestehen und in Umfangsrichtung verlaufende Rippen aufweisen. Das Basiselement ist von einer Abdeckung umhüllt, die dazu beitragen kann, ein Einklemmen des Garns dann zu verhindern, wenn der Trägerkörper, hier also die Garnhülse, in axialer Richtung zusammengedrückt wird. Basiselement und Abdeckung können bei im Wesentlichen aus stofflich gleichem Material bestehen, um ein Recycling des Trägerkörpers zu vereinfachen. Dabei kann das Basiselement im Spritzgussverfahren aus Polypropylen hergestellt sein. Die Abdeckung kann aus versponnenen Polypropylenfasern gebildet sein.

Zur Festlegung der Abdeckung auf dem Basiselement erfolgt unter Verwendung von Wärme und Klebstoff. Es ist auch bekannt, ein Verschweißen von Abdeckung und Basiselement mit Ultraschall vorzunehmen.

Die WO-A-97/42081 offenbart ein gattungsgemäßes Verfahren, bei dem die Abdeckung nach dem Auflegen auf das Basiselement von außen mittels einer erhitzten Rolle so erhitzt wird, dass die Abdeckung mit dem Basiselement verschmilzt. Somit wird die zum Verschmelzen notwendige Hitze über die Abdeckung auf das Basiselement übertragen, das Verfahren ist dementsprechend zeitaufwändig und die gewünschte glatte Oberfläche der Abdeckung kann sich aufgrund der starken Hitzeeinwirkung nicht einstellen.

Die DD-A-257797 offenbart ein Verfahren zur Herstellung einer Verbindung zwischen einer Abdeckung und einem Trägerkörper, bei dem die Abdeckung kurzzeitig und einseitig partiell an der Oberfläche erhitzt wird, so dass diese angeschmolzen wird, und diese anschließend mit fortschreitendem Andrücken auf das Basiselement aufgebracht wird. Bei diesem Verfahren wird ebenfalls die auf das Basiselement aufzubringende Abdeckung stellenweise soweit erhitzt, dass diese einen Mikroformschluss und damit eine Verbindung mit dem Basiselement eingeht. Durch die direkte starke Erhitzung der Abdeckung können auch hier Beeinträchtigungen der glatten Oberfläche der Abdeckung auftreten.

Die bisher bekannten Verfahren zur Verbindung der Abdeckung und des Basiselements haben sich als sehr aufwendig erwiesen und zu Trägerkörpern geführt, bei denen die Verbindung zwischen Abdeckung und Basiselement nicht zufriedenstellend ist, insbesondere die Außenfläche nicht die gewünschte gleichmäßige Glattflächigkeit aufweist.

Die Aufgabe der vorliegenden Erfindung besteht nun darin, ein Verfahren der eingangs erwähnten Art zu schaffen, das insbesondere die beim Stand der Technik festgestellten vorgenannten Nachteile vermeidet.

Erfindungsgemäß wird demnach vorgeschlagen, ein solches Verfahren so auszubilden, dass mindestens ein zu erwärmender Abschnitt des Basiselements über dieses fortschreitend in unmittelbaren Kontakt mit einem erhitzten, das Anschmelzen bewirkenden, in das Basiselement eindringenden Wärmeleitelement gebracht wird und dass die Abdeckung unmittelbar nach dem Anschmelzen fortschreitend auf das Basiselement aufgedrückt wird. Bei diesem Verfahren wird der zur Verbindung von Abdeckung und Basiselement erforderliche Klebstoff aus dem Basiselement selbst gebildet; es wird also kein stofflich abweichender Klebstoff in das Verfahren eingeführt. Dieses Verfahren kann bei geringem apparativem Aufbau in der Serienfertigung bei kurzen Taktzeiten durchgeführt werden. Zu erwärmende Abschnitte eines Basiselements können in der Art einer Punktschweißung aufeinanderfolgen oder eine Teilstrecke oder das Basiselement durchgehend in Form einer Linie überdecken. Aufgrund des Eindringens des Wärmeleitelements in das Basiselement ergibt sich als Folge einer relativ großen Kontaktfläche ein schnelles Anschmelzen des Materials des Basiselements. Beiderseits des Wärmeleitelements bildet sich jeweils ein leicht vorstehender Wulst. Diese Wulste fördern beim Andrücken der Abdeckung auf das Basiselement die Bildung einer festen Verbindung.

Das erfindungsgemäße Verfahren kann so ausgeführt werden, dass die Abdeckung mittels Walzen aufgedrückt wird.

Das erfindungsgemäße Verfahren kann so ausgeführt werden, dass ein spitz auslaufendes, insbesondere messerartig ausgebildetes, in das Basiselement eindringendes Wärmeleitelement verwendet wird. Dabei ergibt sich eine relativ große Kontaktfläche zwischen Wärmeleitelement und Basiselement, wodurch ein schnelles Anschmelzen des Materials des Basiselements erreicht wird. Beiderseits des Basiselements bildet sich ein leicht vorstehender Wulst. Diese Wulste fördern beim Andrücken der Abdeckung auf das Basiselement die Bildung einer festen Verbindung.

Das erfindungsgemäße Verfahren kann ferner so ausgeführt werden, dass für Basiselement und Abdeckung stofflich gleiches thermoplastisches Material unterschiedlicher Struktur verwendet wird. Es liegt dabei also vollständige stoffliche Gleichheit vor, welche ein nachfolgendes Recycling erheblich vereinfacht.

Das erfindungsgemäße Verfahren kann ferner so ausgebildet werden, dass für Basiselement und/oder Abdeckung Polypropylen verwendet wird.

Ferner kann das erfindungsgemäße Verfahren so ausgeführt werden, dass als Abdeckung vlies-, gewebe- oder folienartiges Material verwendet wird.

Mit dem erfindungsgemäßen Verfahren können flache und gewölbte Filtereinsätze zur Filterung von Gasen und/oder Flüssigkeiten gebildet werden.

Das erfindungsgemäße Verfahren kann aber auch zur Bildung starrer oder radial oder axial kompressiver Garnhülsen benutzt werden, die ein Einklemmen von aufgewickeltem Garn bei axialem Zusammenpressen der Hülsen verhindern und darüber hinaus eine so glatte Oberfläche bilden, dass sich auch beim Abspulen der inneren Lagen eines Garnwickels keine Verhakungen und damit Störungen des Garnablaufs ergeben.

Das erfindungsgemäße Verfahren zur Bildung einer Garnhülse, deren Basiselement aus einer Anzahl von miteinander verbundenen Ringen gebildet ist, kann so ausgeführt werden, dass das Wämeleitelement zumindest an einigen dieser Ringe angreift, wobei in Umfangsrichtung der Hülse eine Relativdrehung zwischen dieser und dem Wärmeleitelement erfolgt. Für jeden Ring kann somit eine über den Umfang geschlossene Verbindung mit der Abdeckung erreicht werden.

Schließlich kann das erfindungsgemäße Verfahren so ausgeführt werden, dass die Abdeckung um die Garnhülse herum und an ihren Enden überlappend auf dieser festgelegt wird.

Nachstehend wird eine Ausführungsform des erfindungsgemäßen Verfahrens anhand von Zeichnungen beschrieben. Es zeigt:
- Fig. 1: eine Frontansicht auf eine in Bearbeitungsposition befindliche Garnhülse mit darüber angeordneten kammartigen Wärmeleitelementen;
- Fig. 2: eine Seitenansicht zu Figur 1 und
- Fig. 3: eine der Figur 2 ähnliche Darstellung mit Andrückwalze.

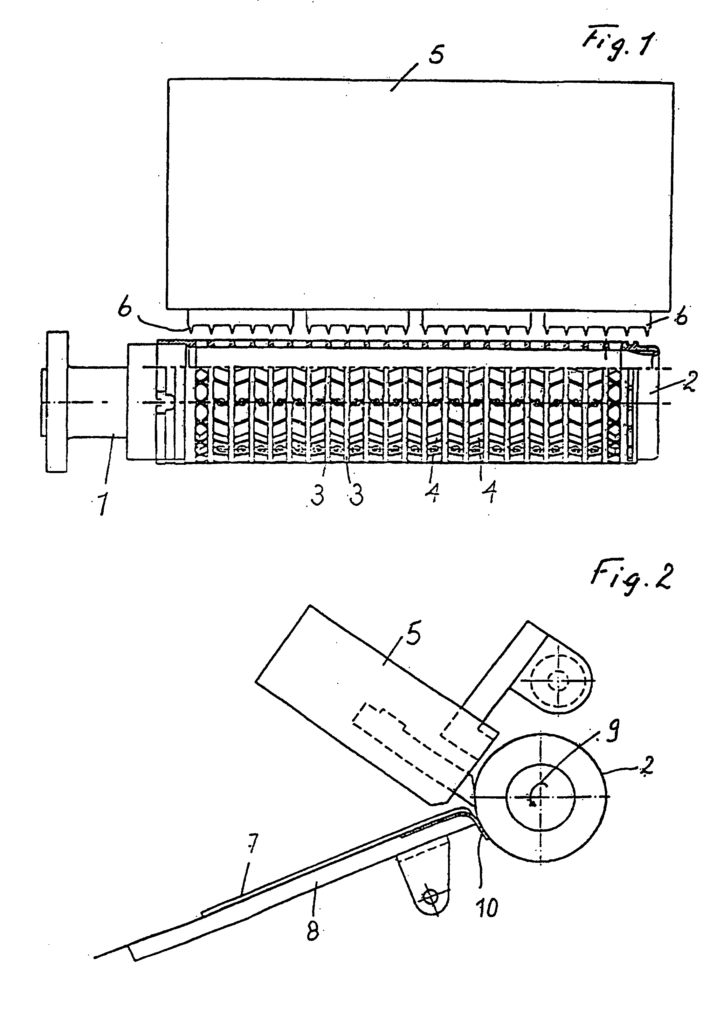

In Figur 1 ist ein mit einem nicht dargestellten Drehantrieb gekoppelter Aufnahmezapfen 1 dargestellt, auf dem eine Gamhülse 2 während des Bearbeitungszyklus drehfest verbunden platziert ist. Die Garnhülse 2 ist gebildet von in Umfangsrichtung verlaufenden Ringen 3, die über im wesentlichen in Achsrichtung verlaufende Stege 4 gekoppelt sind. Oberhalb der Garnhülse 2 ist in Fig. 1 eine Heizeinrichtung 5 dargestellt, die eine Reihe von kammartig nebeneinander angeordneten Wärmeleitelementen 6 trägt. Jedes dieser Wärmeleitelemente 6 ist messerartig ausgebildet. Jeweils sechs derartiger Wärmeleitelemente 6 sind zu einem Modul zusammengefasst. Die Beheizung der Wärmeleitelemente erfolgt durch elektrische Widerstandsheizung.

Die Abstände zwischen den Wärmeleitelementen 6 entsprechen den Abständen zwischen den Ringen 3 der Garnhülse 2, wobei jedes Wärmeleitelement 6 im wesentlichen mittig zu einem Ring 3 ausgerichtet ist.

Das Heizelement 5 mit den Wärmeleitelementen 6 ist, wie Fig. 2 zeigt, durch eine Schwenkbewegung zwischen einer Wirkposition (Fig. 2) und einer Bereit-Stellung (Fig. 1) schwenkbar.

Wie Fig. 2 zeigt, kann eine Abdeckung 7 in Form eines Zuschnitts über einen Zufuhrtisch 8 in Drehrichtung der Garnhülse 2 gemäß Pfeil 9 unmittelbar hinter der Wirkposition der Wärmeleitelemente 6 an die Garnhülse 2 herangeführt und an diese über Druckelemente 10 angedrückt werden.

Nach einer vollen Umdrehung ist danach die Abdeckung 7 auf die Garnhülse 2 aufgelegt und mit dieser sicher verbunden. Die Garnhülse 2 wird dann in üblicher Weise von dem Aufnahmezapfen 1 abgeworfen. Der Aufnahmezapfen 1 wird in die Aufnahmeposition für eine weitere Garnhülse 2 vorgerückt, während ein weiterer Aufnahmezapfen 1 mit einer Garnhülse 2 bestückt in die in den Figuren 1 - 3 dargestellte Position weitergerückt wird.

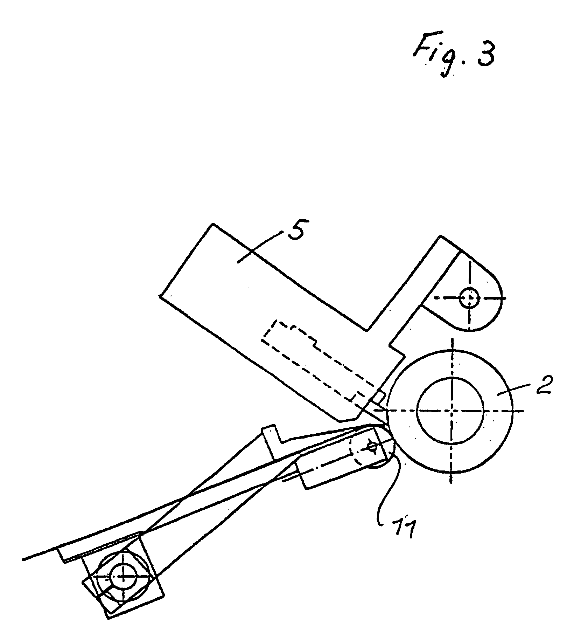

Fig. 3 zeigt die Verwendung einer Druckrolle 11 zum Andrücken einer Abdeckung 7 auf die Oberfläche einer Garnhülse 2.

Bei der Durchführung des Verfahrens wird bevorzugt sowohl für die Garnhülse 2 wie auch für die Abdeckung 7 Polypropylen unterschiedlicher Struktur verwendet. Alternativ kommen auch andere thermoplastische Materialien in Betracht. Es ist nicht erforderlich, dass auch die Abdeckung 7 aus einem thermoplastischen Material besteht. Gleichwohl kann auch dann eine feste Verbindung zwischen Basiselement und Abdeckung erzielt werden, dies aber um den Preis, dass die-für das Recycling wichtige stoffliche Einheit dann nicht mehr vorliegt.

Das Verfahren ist über die dargestellten und beschriebenen Ausführungsbeispiele hinaus keineswegs an rotationssymmetrische Basiselement gebunden. Vielmehr ist es möglich, auch anders geformte, insbesondere auch tafelförmige Basiselemente, auf diese Weise mit einer Abdeckung zu versehen. Die Zusammenarbeit zwischen Basiselement und Wärmeleitelement ergibt sich dann nicht aus Relativdrehungen zwischen Wärmeleitelement und Basiselement, sondern aus translatorische Relativbewegungen.

Sowohl bei rotationssymmetrischen Basiselementen als auch bei anderen Ausformungen derselben können die Zonen der Wirksamkeit der Wärmeleitetemente und damit die Zonen der festen Materialverbindung zwischen Basiselement und Abdeckung mit Abstand voneinander angeordnet sein. Es ist also keineswegs eine durchgehende Verbindung zwingend erforderlich.

## Patentansprüche

1. Verfahren zur Bildung eines Trägerkörpers in Form einer Garnhülse oder eines Filtereinsatzes, mit einem Durchbrüche aufweisenden Basiselement (2) aus thermoplastischem Material und einer damit fest verbundenen, flüssigkeits- und/oder gasdurchlässigen, auf die Oberfläche des Basiselements auslegbaren flachen Abdeckung (7), bei dem die Verbindung zwischen Basiselement (2) und Abdekkung (7) mittels eines partiellen Anschmelzens des Basiselements (2) erfolgt,
**dadurch gekennzeichnet,**
**dass** mindestens ein zu erwärmender Abschnitt des Basiselements (2) über dieses fortschreitend in unmittelbaren Kontakt mit einem erhitzten, das Anschmelzen bewirkenden, in das Basiselement (2) eindringenden Wärmeleitelement (6) gebracht wird und
**dass** die Abdeckung (7) unmittelbar nach dem Anschmelzen fortschreitend auf das Basiselement (2) aufgedrückt wird.

2. Verfahren nach Anspruch 1, **dadurch gekennzeichnet, dass** die Abdeckung (7) mittels Walzen (11) aufgedrückt wird.

3. Verfahren nach Anspruch 1 oder 2, **dadurch gekennzeichnet, dass** ein messerartig oder spitz ausgebildetes Wärmeleitelement (6) verwendet wird.

4. Verfahren nach einem der vorhergehenden Ansprüche, **dadurch gekennzeichnet, dass** für Basiselement (2) und Abdeckung (7) stofflich gleiches thermoplastisches Material unterschiedlicher Struktur verwendet wird.

5. Verfahren nach einem der vorhergehenden Ansprüche, **dadurch gekennzeichnet, dass** für Basiselement (2) und/oder Abdeckung (7) Polypropylen verwendet wird.

6. Verfahren nach einem der vorhergehenden Ansprüche, **dadurch gekennzeichnet, dass** als Abdeckung (7) ein vliesartiges Material verwendet wird.

7. Verfahren nach einem der vorhergehenden Ansprüche 1 bis 5, **dadurch gekennzeichnet, dass** als Abdeckung (7) ein gewebeartiges Material verwendet wird.

8. Verfahren nach einem der vorhergehenden Ansprüche 1 bis 5, **dadurch gekennzeichnet, dass** als Abdeckung (7) folienartiges Material verwendet wird.

9. Verfahren nach einem der Ansprüche 1 bis 8, **dadurch gekennzeichnet, dass** es zur Bildung von ebenen und von dreidimensional geformten Filtereinsätzen verwendet wird.

10. Verfahren nach einem der Ansprüche 1 bis 8, **dadurch gekennzeichnet, dass** es zur Bildung von starren und radial oder axial kompressiblen Garnhülsen als Trägerkörper verwendet wird.

11. Verfahren nach Anspruch 10 zur Bildung einer Garnhülse, deren Basiselement (2) aus einer Anzahl von miteinander verbundenen Ringen (3) gebildet ist, **dadurch gekennzeichnet, dass** das Wärmeleitelement (6) zumindest an einigen dieser Ringe (3) angreift, wobei in Umfangsrichtung der Hülse eine Relativdrehung zwischen dieser und dem Wärmeleitelement (6) erfolgt.

12. Verfahren nach Anspruch 7 oder 8, **dadurch gekennzeichnet, dass** die Abdeckung (7) um die Garnhülse herum und an ihren Enden überlappend auf dieser festgelegt wird.

## Claims

1. A process for the formation of a carrier body in the form of a yarn tube or a filter insert, with a base element (2) of thermoplastic material having openings and a flat cover (7) able to be laid onto the surface of the base element, being rigidly connected thereto and being liquid and/or gas permeable, whereby the connection between base element (2) and cover (7) takes place by means of a partial fusion of the base element (2),
**characterised in that**
at least one section of the base element (2) to be heated is brought via the latter progressively into direct contact with a heated heat-conducting element (6) producing the fusion and penetrating into the base element (2) and
that the cover (7) is pressed progressively onto the base element (2) directly after the fusion.

2. The process according to claim 1, **characterised in that** the cover (7) is pressed on by means of rollers (11).

3. The process according to claim 1 or 2, **characterised in that** a heat-conducting element (6) formed blade-like or pointed is used.

4. The process according to any one of the preceding claims, **characterised in that** materially identical thermoplastic material of differing structure is used for base element (2) and cover (7).

5. The process according to any one of the preceding claims, **characterised in that** polypropylene is used for base element (2) and cover (7).

6. The process according to any one of the preceding claims, **characterised in that** a fleece-like material is used as cover (7).

7. The process according to any one of preceding claims 1 to 5, **characterised in that** a fabric-like material is used as cover (7).

8. The process according to any one of preceding claims 1 to 5, **characterised in that** foil-like material is used as cover (7).

9. The process according to any one of claims 1 to 8, **characterised in that** it is used for the formation of plane and three-dimensionally shaped filter inserts.

10. The process according to any one of claims 1 to 8, **characterised in that** it is used for the formation of rigid and radially or axially compressible yarn tubes as carrier bodies.

11. The process according to claim 10 for the formation of a yarn tube, whose base element (2) is formed by a number of rings (3) connected to one another, **characterised in that** the heat-conducting element (6) engages at least with some of these rings (3), whereby a relative rotation between the tube and the heat-conducting element (6) takes place in the peripheral direction of the tube.

12. The process according to claim 7 or 8, **characterised in that** the cover (7) is fixed around the yarn tube and overlapping on the latter at its ends.

## Revendications

1. Procédé de réalisation d'un corps de support sous forme d'une bobine de fil ou d'une cartouche de filtre avec un élément de base (2) en matière thermoplastique comportant des percements et avec un élément de couverture (7) plat fixé solidement audit élément de base, perméable à l'eau et/ou au gaz, destiné à être posé sur la surface de l'élément de base, la liaison entre l'élément de base (2) et l'élément de couverture (7) étant réalisée en faisant fondre partiellement et superficiellement l'élément de base (2),
**caractérisé en ce**
**qu'**au moins une partie de l'élément de base (2) destinée à être chauffée est progressivement mise en contact direct, par l'intermédiaire dudit élément de base, avec un élément conducteur de chaleur (6) chauffé introduit dans l'élément de base (2) et provoquant la fonte superficielle et
**que**, immédiatement après avoir fondu superficiellement, l'élément de couverture (7) est pressé progressivement sur l'élément de base (2).

2. Procédé selon la revendication 1, **caractérisé en ce que** l'élément de couverture (7) est pressé au moyen de rouleaux (11).

3. Procédé selon la revendication 1 ou 2, **caractérisé en ce qu'**un élément conducteur de chaleur (6) réalisé en forme de couteau ou effilé est utilisé.

4. Procédé selon l'une quelconque des revendications précédentes, **caractérisé en ce que** l'on utilise pour l'élément de base (2) et pour l'élément de couverture (7) une matière thermoplastique identique de structure différente.

5. Procédé selon l'une quelconque des revendications précédentes, **caractérisé en ce que** l'on utilise du polypropylène pour l'élément de base (2) et/ou l'élément de couverture (7).

6. Procédé selon l'une quelconque des revendications précédentes, **caractérisé en ce que** l'on utilise pour l'élément de couverture (7) un matériau non tissé.

7. Procédé selon l'une quelconque des revendications 1 à 5, **caractérisé en ce que** l'on utilise pour l'élément de couverture (7) un matériau tissé.

8. Procédé selon l'une quelconque des revendications 1 à 5, **caractérisé en ce que** l'on utilise pour l'élément de couverture (7) un matériau en feuilles.

9. Procédé selon l'une quelconque des revendications 1 à 8, **caractérisé en ce que** l'on utilise ledit procédé pour réaliser des cartouches de filtre plats et des cartouches de filtre tri-dimensionnels.

10. Procédé selon l'une quelconque des revendications 1 à 8, **caractérisé en ce que** l'on utilise ledit procédé pour réaliser des bobines de fil rigides et compressives en direction radiale ou axiale sous forme des corps de support.

11. Procédé, selon la revendication 10, de réalisation d'une bobine de fil dont l'élément de base (2) consiste en un certain nombre d'anneaux (3) reliés ensemble, **caractérisé en ce que** l'élément conducteur de chaleur (6) agit sur au moins quelques-uns de ces anneaux (3), un mouvement relatif de rotation ayant lieu dans la direction périphérique de la bobine entre celle-ci et l'élément conducteur de chaleur (6).

12. Procédé selon la revendication 7 ou 8, **caractérisé en ce que** l'élément de couverture (7) est placé autour de la bobine de fil et fixé à celle-ci, ses deux extrémités se chevauchant.
